# EUROPEAN PATENT SPECIFICATION

(11) **EP 1 980 783 B1**
(45) Date of publication and mention of the grant of the patent: **04.08.2010**
(21) Application number: 08445014.7
(22) Date of filing: 28.03.2008
(51) Int. Cl.: F16L 55/136, F16L 55/132

(54) **Device for plugging pipes when performing hydrostatic tests**
Vorrichtung zum Rohrverschluss bei der Durchführung hydrostatischer Dichtigkeitstests
Dispositif pour obturer des tuyaux lors de l'exécution de tests hydrostatiques

(30) Priority: 10.04.2007 SE 0700870
(43) Date of publication of application: 15.10.2008
(73) Proprietor: Lintec Combisystem AB, 168 65 Bromma (SE)
(72) Inventor: Linder, Mats, 114 24 Stockholm (SE)
(74) Representative: Rosenquist, Per Olof

(56) References cited:
- US-A- 2 607 370
- US-A- 2 810 401
- US-A- 2 937 666
- US-A- 3 542 076
- US-A- 4 474 216

## Description

### Field of invention

The invention relates to a device for use when performing hydrostatic tests of pipes in a pipe line system for liquids or gases, and for temporary sealing of a pipe end.

A similar device is shown in US 3 542 076.

The prevalent practice for plugging involves the use of compression couplings with a plug. The compression coupling for copper pipes (G) comprises a support sleeve (30) which is inserted into the pipe (33) and valve (21) having an outside thread or a nipple. In one end the valve or nipple has a clamp ring (31), which is pushed onto the outside of the pipe and a pushing nut (32) having an inner thread with a tapered abutment surface against the clamp ring. When the pushing nut is tightened the clamp ring is compressed against the pipe so that the pipe end becomes sealed. A tapered plug sits in the other end of the valve or nipple which becomes sealed when the pushing nut is tightened.

Besides copper pipes multi-layer pipes are widely used today. Multi-layer pipes, also called Alu-Pex pipes, comprise an inner and an outer layer of plastic with an intermediate layer of aluminum.

Compression couplings (F) for Alu-Pex pipes comprise a serrated stem made of brass (22) with 0-shaped rings being pushed into the pipe and a valve (21) having an outer thread or a nipple. In one end the valve or nipple has a clamp ring (23), which is pushed onto the pipe (25) and a pushing nut (24) having an inner thread with a tapered abutment surface against the clamp ring. When the pushing nut is tightened the clamp ring is compressed against the pipe so that the inside of the pipe seals against the O-shaped rings and the coupling will be sealed. A tapered plug sits in the other end of the valve or nipple and becomes sealed when the pushing nut is tightened.

The drawbacks of the compression coupling when the pipes are made of copper is that the clamp ring (30), the support sleeve (31) and the end of the pipe are destroyed at the tightening of the coupling, and the fact that it takes quite a long time to assemble and disassemble the coupling and to cut off the damaged pipe end.

The number of drawbacks of the compression coupling is even higher when using multi-layer pipes. In addition to the fact that the pipe end and the clamp ring (23) are destroyed at the tightening, also the comparatively expensive brass stem (22) with O-shaped rings are destroyed, because it is not possible to remove the pipe after the compression.

In view of assembly and disassembly of the coupling and cutting off the pipe end, it takes about the same amount of time as with a coupling for pipes made of copper.

### Summary of the invention

The object of the present invention is accordingly to provide a device for use in hydrostatic testing of pipes, which eliminates the above drawbacks and which may be mounted and dismounted in a few seconds; which may be reused without having to discard any couplings components; and which leaves the pipe in an undamaged condition after the hydrostatic testing.

The above object is achieved with the device as it is defined in the accompanying claim 1. Preferred and advantageous embodiments and developments of the invention are defined in the subclaim.

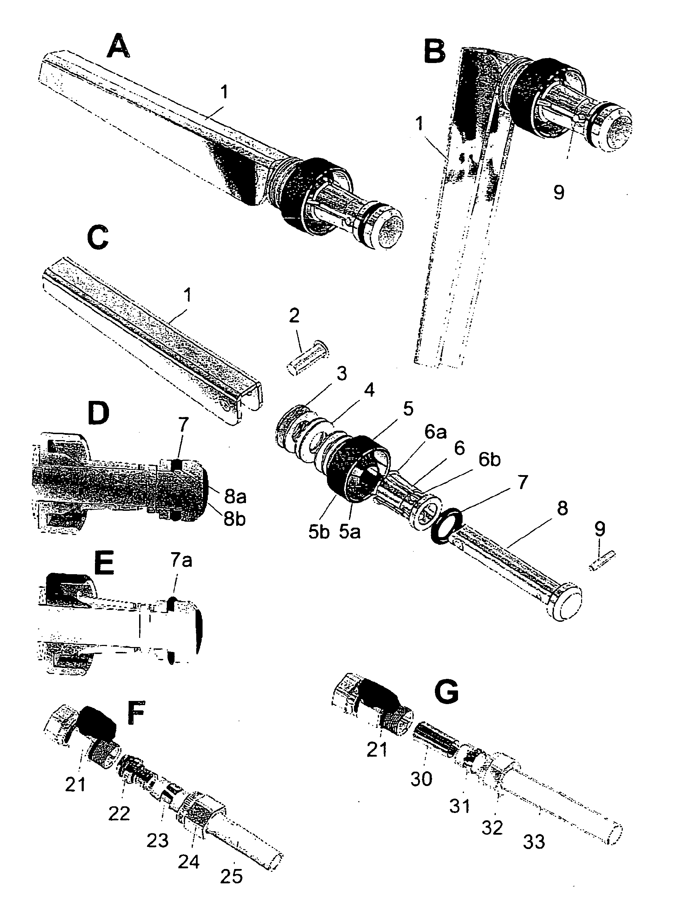

### Short description of the drawing

The invention will now be explained more in detail with reference to the accompanying drawing, in which
figure A shows the device in a unclamped position,
figure B shows the device in a clamped position,
figure C shows the device in a dismantled condition showing its components,
figure D shows an O-shaped ring in an unclamped position,
figure E shows the 0-shaped ring is a compressed position (7a), here the expansion sleeve comes into contact with the stop cleat on the stem for pushing the expansion sleeve forward,
figure F shows a compression coupling for Alu-Pex pipes, and
figure G shows a compression coupling for copper pipes.

### Detailed description of the invention

The device comprises the following components, as shown in figure C:

Eccentric handle (1); pin (2); washer (3); cup springs (4); plugs top (5) with inner taper (5a) and an outer support ring (5b); expansion sleeve (6) with a cutting ring (6a) at the front end and a bore (6b) for a locking pin with such a diameter in relation to the locking pin that a movement is allowed for the compression of the O-shaped ring (7); stem (8) with stop cleat (8a); and a pin (9) which locks the expansion sleeve at the stem and returns the expansion sleeve at the removal of the device from a pipe which has been exposed to a hydrostatic test.

The operation of the device will now be described more in detail with reference to the figures in the drawing.

The device is introduced into an end of a pipe (not shown) in an unclamped condition according to figure A. When the eccentric handle (1) according to figure B is lowered, at first the O-shaped ring (7) is compressed, because the expansion sleeve (6) has a clearance (8b) against the stop cleat (8a) on the stem (8). When the stop cleat on the stem comes into contact with the expansion sleeve (6) the expansion sleeve is pushed forward and its front part with sharp edges (6a) is forced by the tapered inner part (5a) of the expansion ring (5) to press the edges outwardly against the inside of the pipe. The support ring (5b) of the plug top prevents the walls of the pipe from expanding outwardly when the sleeve expands.

The pressure of the cup springs (4), when the eccentric handle compresses the springs when lowered, is transferred through the stem to the edges of the expansion sleeve, which locks the device in the pipe during the hydrostatic test. In the same way as in the previously known devices, mentioned above, and in the way 0-shaped rings generally are used, the O-shaped ring seals against the inside of a pipe at the compression between the stem and the expansion sleeve, whereby the diameter of the 0-shaped ring increases. The eccentric handle is automatically locked in a lowered position because of a negative angle.

When the device is used in Alu-Pex pipes the edges might be caught by the pipe wall and make the removal of the device from the pipe more difficult. For that reason there is a pin (9) according to figures B and C through the stem and the expansion sleeve, which pushes the expansion sleeve back to the unclamped position when the eccentric handle (1) is lifted and is pushed inwardly towards the pipe, whereby the stem (8) with the pin (9) drives the expansion sleeve (6) backwards and the edges are released from the pipe walls.

The invention is not limited to this embodiment, and it is understood that the invention can be modified within the scope of the accompanying claims.

## Claims

1. Device for use at hydrostatic testing of pipes in a pipe line system for liquids or gases or any other provisional sealing of a pipe end comprising a stem (8), a plug stop (5) with an inner tapering (5a) and an outer support ring (5b), through which the stem (8) passes, an eccentric handle (1), pivotally connected to the stem (8), whereby an expansion sleeve (6) having a cutting ring (6a) is arranged between the stem (8) and the plug stop (5), and an O-shaped ring (7) provided between the expansion sleeve (6) and the stem (8), whereby the expansion sleeve (6) at lowering of the eccentric handle (11) is made to expand against the inner tapering (5a) of the plug top (5), while the O-shaped ring (7) has been compressed before that, whereby the expansion sleeve (6) is brought forward and its cutting ring (6a) is pressed outwards and engages with the inside of the pipe, **characterized in that** the stem (8) has a stop cleat (8a) for cooperation with the rear end of the expansion sleeve (6) for limiting the compression of the O-shaped ring (7) with the aid of a clearance (8b), which exists between the expansion sleeve (6) and the stop cleat (8a) of the stem (8), and **in that** a locking pin (9) is arranged to pass through a boring in the stem (8) and through two mutually aligned holes in the expansion sleeve (6) with such a diameter in relation to the locking pin (9) that a movement is allowed for compressing the O-shaped ring (7), and **in that** the pin (9), which is mounted in the stem (8), when the eccentric handle (1) in upraised position is pushed inwardly towards the pipe, pushes the expansion sleeve (6) backwards to the unclamped position and disengages the sleeve in case the cutting ring (6a) has got stuck in the pipe.

2. Device according to claim 1, **characterized in that** a washer (3) and cup springs (4) are arranged between the eccentric handle (1) and the plug stop (5), whereby the pressure from the compressed cup springs (4), when the eccentric handle (1) is depressed, keeps the expansion sleeve with its expanded cutting ring (6a) in place during a hydrostatic test, whereby the eccentric handle (1) is automatically locked through a negative angle against the stem (8).

## Patentansprüche

1. Vorrichtung zur Verwendung beim hydrostatischen Testen von Rohren in einem Rohrleitungssystem für Flüssigkeiten oder Gase oder beliebigem anderen provisorischen Abdichten eines Rohrendes, umfassend einen Schaft (8), einen Steckanschlag (5) mit einer inneren Abschrägung (5a) und einem äußeren Stützring (5b), durch den der Schaft (8) hindurchtritt, einen schwenkbar mit dem Schaft (8) verbundenen exzentrischen Griff (1), wobei eine Dehnhülse (6) mit einem Schneidring (6a) zwischen dem Schaft (8) und dem Steckanschlag (5) angeordnet ist, und einen zwischen der Dehnhülse (6) und dem Schaft (8) vorgesehenen O-förmigen Ring (7), wobei die Dehnhülse (6) beim Absenken des exzentrischen Griffs (11) dazu gemacht ist, sich an der inneren Abschrägung (5a) des Steckenschlages (5) aufzuweiten, während der O-förmige Ring (7) zuvor komprimiert worden ist, wobei die Dehnhülse (6) vorwärts verlagert wird und ihr Schneidring (6a) nach außen gepresst wird und mit dem inneren des Rohrs zusammenwirkt, **dadurch gekennzeichnet, dass** der Schaft (8) eine Anschlagsleiste (8a) zum Zusammenspiel mit dem hinteren Ende der Dehnhülse (6) zum Begrenzen der Kornpression des O-förmigen Rings (7) mit Hilfe eines Abstands (8b) aufweist, welcher zwischen der Dehnhülse (6) und der Anschlagsleiste (8a) des Schafts (8) existiert, und dass ein Sperrstift (9) eingerichtet ist, durch eine Bohrung in dem Schaft (8) und durch zwei zueinander ausgerichtete Löcher in der Dehnhülse (6) mit einem solchen Durchmesser in Bezug auf den Sperrstift (9), dass eine Bewegung zum Komprimieren des O-förmigen Rings (7) ermöglicht ist, hindurchzutreten, und dass der Stift (9), welcher in dem Schaft (8) montiert ist, dann, wenn der exzentrische Griff (1) in erhobener Position nach innen in Richtung des Rohrs gedrückt wird, die Dehnhülse (6) zurück in die nicht klemmende Position drückt und die Hülse löst, falls der Schneidring (6a) in dem Rohr feststeckt.

2. Vorrichtung nach Anspruch 1, **dadurch gekennzeichnet, dass** eine Unterlegscheibe (3) und Tellerfedern (4) zwischen dem exzentrischen Griff (1) und dem Steckanschlag (5) angeordnet sind, wobei der Druck von den komprimierten Tellerfedern (4) die Dehnhülse mit ihrem gedehnten Schneidring (6a) während eines hydrostatischen Tests an Ort und Stelle, hält, wenn der exzentrische Griff (1) niedergedrückt ist, wobei der exzentrische Griff (1) automatisch durch einen negativen Winkel gegenüber dem Schaft (8) gesperrt wird.

## Revendications

1. Dispositif destiné à être utilisé pour le test hydrostatique des tuyaux dans un système de conduite pour les liquides ou les gaz ou n'importe quel autre étanchéité provisoire d'une extrémité de tuyau comprenant une tige (8), un bouchon (5) avec une conicité interne (5a) et un anneau de support externe (5b) à travers lequel la tige (8) passe, une poignée excentrique (1) raccordée de manière pivotante à la tige (8), moyennant quoi un manchon d'expansion (6) ayant un anneau de coupe (6a) est agencé entre la tige (8) est le bouchon (5), et un joint torique (7) prévu entre le manchon d'expansion (6) et la tige (8), moyennant quoi le manchon d'expansion (6) pour abaisseur la poignée excentrique (11) peut s'expanser contre la conicité interne (5a) du bouchon (5), alors que le joint torique (7) a été comprimé avant cela, moyennant quoi le manchon d'expansion (6) est amené vers l'avant et son anneau de coupe (6a) est comprimé vers l'extérieur et se met en prise avec l'intérieur du tuyau, **caractérisé en ce que** la tige (8) a une cale de butée (8a) pour la coopération avec l'extrémité arrière du manchon d'expansion (6) pour limiter la compression du joint torique (7) à l'aide d'un jeu (8b), qui existe entre le manchon d'expansion (6) et la cale de butée (8a) de la tige (8), est **en ce qu'**une broche de blocage (9) est agencée pour passer à travers un alésage dans la tige (8) et à travers deux trous mutuellement alignés dans le manchon d'expansion (6) avec un diamètre tel par rapport, à la broche de blocage (9) qu'un mouvement est autorisé pour comprimer le joint torique (7) et **en ce que** la bronche (9) qui est montée dans la tige (8), lorsque la peignée excentrique (1) dans la position relevée est poussée vers l'intérieur vers le tuyau, pousse le manchon d'expansion (6) vers l'arrière dans la position débloqué et dégage le manchon dans le cas dans lequel l'anneau de coupe (6a) s'est bloqué dans le tuyau.

2. Selon la revendication 1, **caractérisé en ce qu'**une rondelle (3) et des ressorts Belleville (4) sont agencés entre la poignée excentrique (1) et le bouchon (5), moyennant quoi la pression provenant des ressorts Belleville comprimes (4) , lorsque la poignée excentrique (1) est enfoncée, maintient le manchon d'expansion avec son anneau de coupe expansé (6a) en place pendant un test hydrostatique, moyennant quoi la poignée excentrique (1) est automatiquement verrouillée par un angle négatif contre la tige (8).
